(19) Europäisches Patentamt
European Patent Office
Office européen des brevets

(11) **EP 1 517 738 B1**

(12) **FASCICULE DE BREVET EUROPEEN**

(45) Date de publication et mention de la délivrance du brevet:
**30.12.2015 Bulletin 2015/53**

(21) Numéro de dépôt: **03760732.2**

(22) Date de dépôt: **17.06.2003**

(51) Int Cl.:
**B01D 53/047** *(2006.01)*      **B01D 53/04** *(2006.01)*
**C01B 3/56** *(2006.01)*

(86) Numéro de dépôt international:
**PCT/FR2003/001828**

(87) Numéro de publication internationale:
**WO 2004/000441 (31.12.2003 Gazette 2004/01)**

(54) **PROCEDE DE TRAITEMENT D'AU MOINS UN GAZ DE CHARGE PAR ADSORPTION A MODULATION DE PRESSION**

VERFAHREN ZUR BEHANDLUNG MINDESTENS EINES SPEISEGASGEMISCHES DURCH DRUCKWECHSELADSORPTION

METHOD FOR TREATING AT LEAST ONE FEED GAS MIXTURE BY PRESSURE SWING ADSORPTION

(84) Etats contractants désignés:
**AT BE BG CH CY CZ DE DK EE ES FI FR GB GR HU IE IT LI LU MC NL PT RO SE SI SK TR**

(30) Priorité: **19.06.2002 FR 0207568**

(43) Date de publication de la demande:
**30.03.2005 Bulletin 2005/13**

(73) Titulaire: **L'AIR LIQUIDE, Société Anonyme pour l'Etude et l'Exploitation des Procédés Georges Claude 75007 Paris (FR)**

(72) Inventeurs:
• **MONEREAU, Christian**
  **F-75011 Paris (FR)**
• **DE SOUZA, Guillaume**
  **F-92130 Issy les Moulineaux (FR)**

(74) Mandataire: **Conan, Philippe Claude L'Air Liquide SA Direction de la Propriété Intellectuelle 75, quai d'Orsay 75321 Paris Cedex 07 (FR)**

(56) Documents cités:
| EP-A- 0 375 220 | EP-A- 0 458 350 |
| EP-A- 0 925 821 | EP-A- 1 018 488 |
| FR-A- 2 785 554 | US-A- 5 258 056 |
| US-A- 5 407 465 | |

EP 1 517 738 B1

**Description**

La présente invention concerne un procédé de traitement d'un gaz par adsorption, du type dans lequel on utilise une unité de traitement par adsorption à modulation de pression, couramment appelée unité PSA (pour « Pressure Swing Adsorption »), et dans lequel on fait suivre à ladite unité de traitement un cycle nominal de fonctionnement, déterminé en fonction de conditions nominales de fonctionnement, et en vue de garantir des performances minimales de traitement.

Les unités PSA sont couramment utilisées pour la séparation et/ou la purification de gaz de charge, notamment dans les domaines de la production d'hydrogène et de dioxyde de carbone, du séchage, de la séparation des constituants de l'air, etc.

EP 0 375 220 A1 divulgue une unité PSA - ainsi que son utilisation pour la production d'air respirable en avion - comprenant deux adsorbeurs dont l'un extrait un composant d'un mélange gazeux entrant pendant que l'autre est régénéré. Le système est muni de vannes qui contrôlent l'admission des flux pour l'adsorption et l'élution. Des capteurs mesurent des paramètres (pression ambiante, pression et température du mélange à traiter), un microprocesseur traite les données et modifie les intervalles d'adsorption et de purge de sorte à répondre en temps réel aux changements de conditions.

Les unités « PSA-$H_2$ » qui produisent de l'hydrogène sensiblement pur sont utilisées avec des gaz de charge d'origine variée, formés par exemple de gaz issus de reformage à la vapeur, de raffinerie ou de four à coke, ou bien formés de gaz résiduaires d'unités de production d'éthylène ou de styrène, ou d'unités de séparation cryogénique hydrogène-monoxyde de carbone.

De manière générale, une unité PSA est constituée de plusieurs adsorbeurs qui suivent en décalage dans le temps un cycle de fonctionnement, par la suite appelé par commodité « cycle PSA », qui est réparti uniformément en autant de temps de phase qu'il y a d'adsorbeurs en fonctionnement, et qui est formé d'étapes de base, à savoir les étapes :

- d'adsorption à sensiblement une haute pression du cycle ;
- de dépressurisation à co-courant, généralement depuis la haute pression du cycle ;
- de dépressurisation à contre-courant, généralement jusqu'à la basse pression du cycle ;
- d'élution à sensiblement une basse pression du cycle ; et
- de repressurisation, depuis la basse pression du cycle jusqu'à la haute pression du cycle.

Par la suite, on s'intéresse au fonctionnement d'une unité PSA en régime établi, c'est-à-dire en dehors de périodes transitoires de démarrage ou d'arrêt de l'unité qui correspondent généralement à des cycles spéciaux élaborés à cet effet.

La contrainte principale de fonctionnement d'une unité PSA en régime établi consiste en le niveau de pureté du produit. Sous cette condition de fonctionnement, les performances de traitement d'une unité PSA sont alors généralement optimisées soit pour maximiser le rendement d'extraction (quantité de gaz produit/quantité de ce gaz présent dans le gaz de charge), soit pour minimiser l'énergie consommée.

On obtient de la sorte un cycle nominal de fonctionnement de l'unité PSA, déterminé directement en fonction des conditions nominales de fonctionnement (débit du gaz de charge, débit du gaz traité, composition du gaz de charge, température de fonctionnement de l'unité, ...).

Lorsque les conditions de fonctionnement ne s'écartent que de peu des conditions nominales, on a proposé par le passé de réguler le fonctionnement de l'unité PSA en ajustant un ou plusieurs paramètres du cycle nominal de façon à garantir que les performances de traitement restent supérieures à des limites minimales prédéfinies. Deux régulations qui relèvent de cette approche sont :

- la régulation « de capacité » qui consiste à modifier la durée du temps de phase du cycle en fonction de la variation du débit de gaz de charge ; et
- la régulation « sur le contrôle de pureté » qui consiste à modifier ce temps de phase en fonction de la pureté du gaz traité.

Cependant, lorsque les conditions de fonctionnement s'écartent de manière importante des conditions nominales de fonctionnement, le fonctionnement de l'unité PSA est dégradé, les performances escomptées n'étant plus atteintes.

Le but de la présente invention est de proposer un procédé de traitement du type défini plus haut, et notamment un procédé de production d'hydrogène, qui permette d'assurer la continuité de fonctionnement d'une unité PSA lors d'une variation brusque et/ou importante des conditions de fonctionnement de l'unité, notamment celles en rapport avec le gaz de charge, et plus précisément sa composition, sa pression, son débit et/ou sa température.

A cet effet, l'invention a pour objet un procédé de traitement du type précité pour la production d'hydrogène selon la revendication 1, dans lequel on dispose d'au moins un cycle auxiliaire de fonctionnement préprogrammé, différent du cycle nominal, et, lorsque les conditions de fonctionnement diffèrent des conditions nominales au point que l'unité de traitement n'atteint plus ses performances minimales, on impose à l'unité de traitement de suivre le ou un des cycles auxiliaires.

Suivant d'autres caractéristiques de ce procédé :

- la composition du gaz de charge est une condition de fonctionnement ;
- la pression du gaz de charge ou la pression d'un gaz résiduaire en sortie de l'unité de traitement sont des conditions de fonctionnement ;
- la température du gaz de charge est une condition de fonctionnement ;
- le débit du gaz de charge est une condition de fonctionnement ;
- on dispose d'étapes intermédiaires préprogrammées de passage d'un cycle à l'autre parmi les cycles nominal et auxiliaire(s) ;
- le cycle nominal de fonctionnement est repéré par un triplet X.Y.Z, où X désigne le nombre d'adsorbeurs actifs de l'unité de traitement, Y le nombre d'adsorbeurs en adsorption simultanée, et Z le nombre d'équilibrages de pressions sur ledit cycle nominal, et au moins l'un du nombre X' d'adsorbeurs actifs, du nombre Y' d'adsorbeurs en adsorption simultanée, et du nombre Z' d'équilibrages de pressions sur le ou chaque cycle auxiliaire est différent du nombre correspondant du cycle nominal;
- l'un des équilibrages de pressions est un équilibrage partiel, de sorte que l'un au moins des nombres Z et Z' n'est pas un nombre entier ;
- le cycle nominal et le ou chaque cycle auxiliaire comportent au moins une étape d'adsorption à une haute pression du cycle, une étape de purge consistant en une dépressurisation à contre-courant jusqu'à la basse pression du cycle, une étape d'élution à ladite basse pression, et une étape de repressurisation jusqu'à ladite haute pression, le ratio $\frac{\text{durée de la phase d'adsorption}}{\text{durée des étapes de purge et d'élution}}$ étant compris sensiblement entre 0,5 et 2 pour chacun des cycles ; et
- l'unité de traitement est une unité de production d'hydrogène.

L'invention a aussi pour objet une installation de production combinée d'hydrogène et de monoxyde de carbone comportant :

- au moins un réacteur de production d'un gaz de synthèse,
- au moins une unité de décarbonatation du gaz de synthèse,
- au moins une unité d'épuration du gaz décarbonaté,
- au moins une unité cryogénique de production de monoxyde de carbone, reliée à une sortie de l'unité d'épuration, et
- au moins une unité de traitement par adsorption à modulation de pression reliée à une autre sortie de l'unité d'épuration

caractérisée en ce que ladite unité de traitement par adsorption à modulation de pression est apte à la mise en oeuvre du procédé tel que défini précédemment.

L'unité d'épuration comporte au moins deux bouteilles d'adsorbants afin de permettre le fonctionnement en continu de l'installation. L'unité de traitement par adsorption à modulation de pression comporte quant à elle un nombre variable d'adsorbeurs, en fonction des débits et/ou du rendement en hydrogène recherché, le nombre d'adsorbeurs peut ainsi varier de quatre à seize.

L'invention sera mieux comprise à la lecture de la description qui va suivre, donnée uniquement à titre d'exemple et faite en se référant aux dessins sur lesquels :

- la figure 1 est une vue schématique d'une installation de production combinée d'hydrogène et de monoxyde de carbone, comportant une unité PSA mettant en oeuvre un procédé selon l'invention ; et
- les figures 2 et 3 sont des diagrammes de fonctionnement de l'unité PSA de la figure 1.

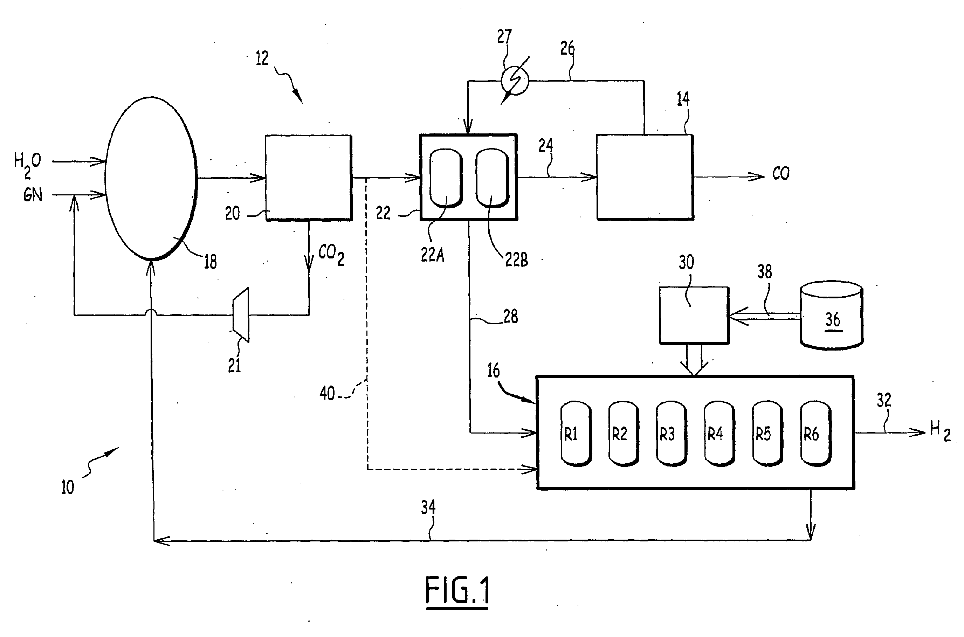

Sur la figure 1 est représentée une installation 10 de production combinée d'hydrogène et de monoxyde de carbone à partir à la fois d'eau et d'un gaz de charge constitué de gaz naturel GN. L'installation comporte une ligne 12 de traitement du gaz naturel, en aval de laquelle sont raccordées à la fois une unité cryogénique 14 de production de monoxyde de carbone (CO) et une unité 16 de production d'hydrogène ($H_2$), détaillée plus loin.
La ligne de traitement 12 comporte, d'amont en aval :

- un réacteur 18 de production d'un gaz de synthèse, dans lequel le gaz naturel est désulfuré, des hydrocarbures lourds sont décomposés en méthane et en dioxyde de carbone, et le méthane est converti en gaz de synthèse riche en hydrogène et contenant du monoxyde de carbone et du dioxyde de carbone ;
- une unité 20 de décarbonatation par lavage aux amines, dont un flux résiduaire riche en dioxyde de carbone est recomprimé en 21 et recyclé en amont du réacteur 18 ; et
- une unité 22 d'épuration permettant d'arrêter la quasi-totalité de l'eau et d'abaisser fortement la teneur en dioxyde de carbone.

Une première sortie 24 de l'unité d'épuration 22 est raccordée à l'unité cryogénique 14, qui comporte une ligne 26 de retour à la ligne d'épuration pourvue d'un réchauffeur 27. Une deuxième sortie 28 de l'unité d'épuration 22 est raccordée à l'unité 16 de façon à fournir le gaz de charge pour cette unité 16.

L'unité d'épuration 22 comporte deux bouteilles d'adsorbants 22A, 22B mises en ligne de façon alternée pour assurer l'épuration par adsorption modulée en température du mélange gazeux qui sort de l'unité de lavage aux amines 20, l'adsorption de l'eau et du dioxyde de carbone s'effectuant à froid et la désorption de ces composants à chaud.

L'unité 16 comporte quant à elle six adsorbeurs R1 à R6, comportant chacun un matériau adsorbant adapté pour fixer par adsorption des impuretés, telles que les hydrocarbures et l'eau contenus dans le gaz de charge de la ligne 28. Différents types de matériaux adsorbants sont envisageables, tels que des charbons activés, des gels de silice et/ou des tamis moléculaires.

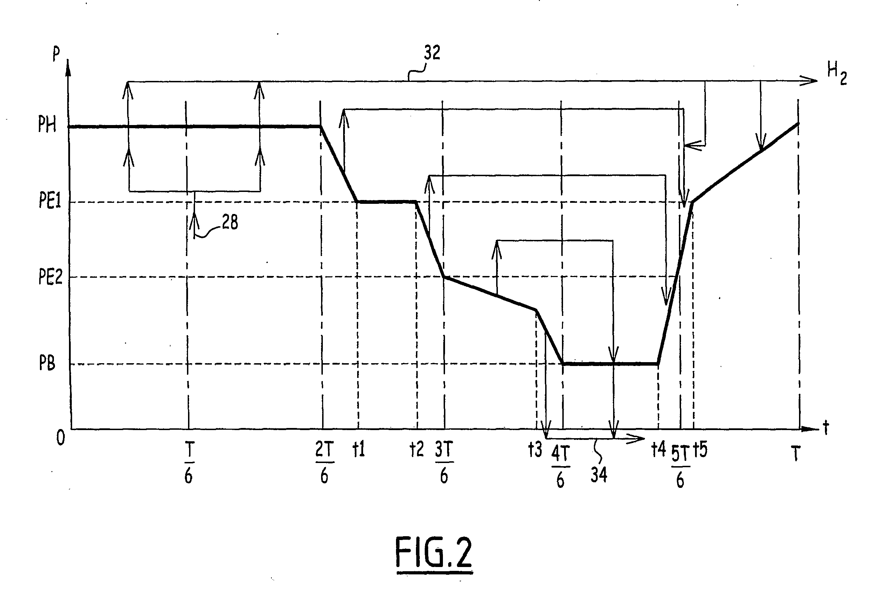

L'unité 16 est de type PSA, c'est-à-dire à adsorption modulée en pression. Elle comporte à cet effet des conduites et des vannes non représentées, ainsi qu'une unité de commande 30 détaillée plus loin, adaptées pour faire suivre à chaque adsorbeur R1 à R6 un cycle de période T, constitué de six temps de phase de même durée, et dont un exemple est représenté sur la figure 2. En considérant que le cycle représenté s'applique depuis l'instant $\underline{t}$ = 0 à $\underline{t}$ = T à l'adsorbeur R6, le fonctionnement de l'adsorbeur R5 s'en déduit par décalage dans le temps de T/6, celui de l'adsorbeur R4 par décalage dans le temps de 2T/6, et ainsi de suite jusqu'à celui de l'adsorbeur R1 obtenu par décalage dans le temps de 5T/6.

Du fait de la dualité temps de phase/adsorbeur, cela revient à considérer que, sur la figure 2, l'adsorbeur R6 suit le premier temps de phase représenté entre les instants $\underline{t}$ = 0 et $\underline{t}$ = T/6, l'adsorbeur R5 suit le deuxième temps de phase représenté entre les instants $\underline{t}$ = T/6 et $\underline{t}$ = 2T/6, et ainsi de suite jusqu'à l'adsorbeur R1 qui suit le sixième temps de phase représenté entre les instants $\underline{t}$ = 5T/6 et $\underline{t}$ = T.

Sur la figure 2, où les temps $\underline{t}$ sont portés en abscisses et les pressions absolues P en ordonnées, les traits orientés par les flèches indiquent les mouvements et destinations des courants gazeux, et, en outre, le sens de circulation dans les adsorbeurs R1 à R6 : lorsqu'une flèche est dans le sens des ordonnées croissantes (vers le haut du diagramme), le courant est dit à co-courant dans l'adsorbeur ; si la flèche dirigée vers le haut est située au-dessous du trait indiquant la pression dans l'adsorbeur, le courant pénètre dans l'adsorbeur par l'extrémité d'entrée de cet adsorbeur ; si la flèche, dirigée vers le haut, est située au-dessus du trait indiquant la pression, le courant sort de l'adsorbeur par l'extrémité de sortie de l'adsorbeur, les extrémités d'entrée et de sortie étant respectivement celles du gaz à traiter et du gaz soutiré en production. Lorsqu'une flèche est dans le sens des ordonnées décroissantes (vers le bas du diagramme) le courant est dit à contre-courant dans l'adsorbeur; si la flèche dirigée vers le bas est située au-dessous du trait indiquant la pression de l'adsorbeur, le courant sort de l'adsorbeur par l'extrémité d'entrée de cet adsorbeur ; si la flèche dirigée vers le bas est située au-dessus du trait indiquant la pression, le courant pénètre dans l'adsorbeur par l'extrémité de sortie de cet adsorbeur, les extrémités d'entrée et de sortie étant toujours celles du gaz à traiter et du gaz soutiré en production. L'extrémité d'entrée des adsorbeurs est leur extrémité inférieure.

Ainsi, toujours en considérant que le cycle de la figure 2 s'applique depuis l'instant $\underline{t}$ = 0 à $\underline{t}$ = T à l'adsorbeur R6, ce cycle comporte une phase d'adsorption de $\underline{t}$ = 0 à $\underline{t}$ = 2T/6 et une phase de régénération de $\underline{t}$ = 2T/6 à $\underline{t}$ = T.

Dans toute la suite, les pressions sont données en bars absolus.

Plus précisément, durant la phase d'adsorption, le gaz de charge véhiculé par la ligne 28 arrive à l'entrée de l'adsorbeur à une haute pression d'adsorption, notée PH, de 20 bars environ. Un flux d'hydrogène sensiblement pur est alors soutiré en tête, sous la même pression, et alimente en partie une ligne 32 de production d'hydrogène, le reste étant envoyé à un autre adsorbeur en cours d'étape de repressurisation décrite plus loin.

La phase de régénération comporte, de $\underline{t}$ = 2T/6 à $\underline{t}$ = 4T/6 :

- de $\underline{t}$ = 2T/6 à $\underline{t}$ = t1, t1 étant inférieur à 3T/6, une première étape de dépressurisation à co-courant durant laquelle la sortie de l'adsorbeur R6 est reliée à celle d'un autre adsorbeur dans une étape de repressurisation décrite plus loin, jusqu'à équilibre des pressions des deux adsorbeurs à une première pression d'équilibre, notée PE1 ;
- de t1 à $\underline{t}$ = t2, t2 étant inférieur à 3T/6; une étape d'attente durant laquelle aucun flux ne circule dans l'adsorbeur, sa pression demeurant sensiblement égale à la première pression d'équilibre PE1 ;
- de t2 à $\underline{t}$ = 3T/6, une deuxième étape de dépressurisation à co-courant durant laquelle le flux sortant à co-courant de l'adsorbeur R6 est envoyé à la sortie d'un autre adsorbeur en début d'étape de repressurisation, décrite plus loin, jusqu'à équilibre des pressions des deux adsorbeurs à une seconde pression d'équilibre PE2

- dé $t$ = 3T/6 à $t$ = t3, t3 étant inférieur à 4T/6, une troisième étape de dépressurisation à co-courant durant laquelle le flux sortant à co-courant de l'adsorbeur est décomprimé et envoyé à la sortie d'un adsorbeur en étape d'élution décrite plus loin ; et
- de t3 à $t$ = 4T/6, une étape de dépressurisation à contre-courant, couramment appelée étape de purge, durant laquelle le flux sortant de l'adsorbeur R6 est envoyé à une ligne de résiduaire 34, raccordée en sortie au réacteur 18 ; cette étape se poursuit jusqu'à la basse pression du cycle, notée PB et valant environ 1,6 bar.

La phase de régénération comporte ensuite, de $t$ = 4t/6 à $t$ = t4, une étape d'élution durant laquelle le matériau adsorbant est balayé à contre-courant par un gaz d'élution formé par le gaz issu de l'adsorbeur en troisième étape de dépressurisation à co-courant, afin de désorber la quasi-totalité des impuretés précédemment adsorbées. Le flux en sortie de l'adsorbeur forme alors un gaz résiduaire sous la basse pression PB, envoyé dans la ligne 34.

La phase de régénération comporte enfin :

- de t4 à $t$ = 5T/6, une première étape de repressurisation à contre-courant, durant laquelle l'adsorbeur reçoit lé flux issu de l'adsorbeur en deuxième étape de dépressurisation à co-courant, jusqu'à la deuxième pression d'équilibre PE2 ;
- de $t$ = 5T/6 à $t$ = t5, une deuxième étape de repressurisation à contre-courant, durant laquelle l'adsorbeur reçoit à la fois une partie des flux issus des adsorbeurs en phase d'adsorption et le flux issu de l'adsorbeur en première étape de dépressurisation à co-courant, jusqu'à ce que la pression atteigne la valeur de la première pression d'équilibre PE1 ; et
- de $t$ = t5 à $t$ = T, une troisième étape de repressurisation à contre-courant durant laquelle l'adsorbeur reçoit uniquement une partie des flux issus des adsorbeurs en phase d'adsorption, jusqu'à ce que la pression de l'adsorbeur atteigne la pression haute PH du cycle.

Le cycle de la figure 2 qui vient d'être décrit en détail est communément appelé « cycle 6.2.2 » en respectant la convention de notation « cycle X.Y.Z » suivant laquelle X correspond au nombre total d'adsorbeurs en fonctionnement, Y correspond au nombre d'adsorbeurs en phase d'adsorption, et Z correspond au nombre d'équilibrages de pression.

L'unité PSA 16 est pilotée par l'unité de commande 30, qui lui envoie les différents signaux de commande des vannes de l'unité PSA afin de faire suivre aux six adsorbeurs R1 à R6 un cycle de fonctionnement tel que décrit ci-dessus.

L'unité 30 est pourvue d'une mémoire 36, possédant les paramètres du cycle de la figure 2 décrit ci-dessus, mais également les paramètres d'autres cycles de fonctionnement comme il sera expliqué plus loin. La mémoire 36 est reliée à l'unité 30 via une ligne 38 de transmission de données.

Le fonctionnement global de l'installation 10 est le suivant.

En régime établi, c'est-à-dire en dehors de périodes de démarrage ou d'arrêt de l'installation, le réacteur 18 est alimenté en gaz naturel et en eau, et produit un mélange riche en hydrogène, en monoxyde de carbone et en dioxyde de carbone, contenant en plus du méthane, de l'azote, de l'eau, ainsi que des traces d'hydrocarbures lourds.

Par lavage aux amines dans l'unité 20, le flux véhiculé à la sortie de cette unité 20 présente à la fois de fortes teneurs en hydrogène et en monoxyde de carbone. Un exemple des données relatives à ce gaz sont résumées dans le tableau ci-dessous :

| | | |
|---|---|---|
| | $H_2$ | 73,35 |
| | $N_2$ | 0,74 |
| Composition en % volumique, à sec | CO | 19,31 |
| | $CO_2$ | 0,01 |
| | $CH_4$ | 6,59 |
| Débit (Nm$^3$/h) | | 38 000 |
| Pression (bar abs) | | 23,8 |
| Température (°C) | | 35 |

Ce flux est envoyé à l'unité d'épuration 22, puis à l'unité cryogénique 14 qui produit un flux de monoxyde de carbone sensiblement pur, en évacuant dans la ligne 26 un mélange gazeux riche en hydrogène utilisé pour la régénération de successivement l'une et l'autre des bouteilles 22A et 22B de l'unité d'épuration.

Le flux en sortie de la bouteille 22A, 22B en régénération est envoyé dans la ligne 28, qui véhicule en continu ce flux jusqu'à l'unité PSA 16. Un exemple des données relatives à ce flux gazeux est résumé dans le tableau ci-dessous :

|  | H$_2$ | 98,01 |
|---|---|---|
|  | N$_2$ | 0,17 |
| Composition en % volumique, à sec | CO | 0,31 |
|  | CO$_2$ | 0,01 |
|  | CH$_4$ | 1,51 |
| Débit (Nm$^3$/h) |  | 26 500 |
| Pression (bar abs) |  | 21,3 |
| Température (°C) |  | 30 |

Le fonctionnement de l'unité PSA 16 est imposé par l'unité de commande 30, en faisant suivre aux adsorbeurs R1 à R6 le cycle 6.2.2 de la figure 2, qui constitue un cycle nominal pour les conditions de fonctionnement détaillées ci-dessus, et pour les performances considérées comme optimales en regard du bilan matière suivant :

|  |  | Gaz produit en 32 | Gaz résiduaire en 34 |
|---|---|---|---|
|  | H$_2$ | 100 | 88,03 |
|  | N$_2$ | 0 | 1,02 |
| Composition en % volumique, à sec | CO | 0 | 1,86 |
|  | CO$_2$ | 0 | 0,06 |
|  | CH$_4$ | 0 | 9,04 |
| Débit (Nm$^3$/h) |  | 22 075 | 4 425 |
| Pression (bar abs) |  | 20,6 | 1,35 |
| Température (°C) |  | 30 | 30 |

Ce qui précède correspond à un fonctionnement dit nominal de l'installation 10.

Cependant, en cas de défaillances ou de difficultés de fonctionnement de l'unité d'épuration 22 et/ou de l'unité cryogénique 14, il est nécessaire, pour maintenir un flux de production d'hydrogène en 32, d'envoyer directement le flux issu de l'unité de lavage aux amines 20 à l'unité PSA 16, via une conduite de dérivation 40 tracée en pointillés sur la figure 1.

Le traitement du gaz issu de l'unité 20 par l'unité 16 qui continuerait de suivre le cycle 622 de la figure 2 se heurterait à deux limitations principales :

- une quantité d'impuretés à arrêter beaucoup plus élevée qu'auparavant pendant la phase d'adsorption avec le même volume d'adsorbant ; et
- un volume de résiduaire à évacuer beaucoup plus élevé qu'auparavant lors des étapes de purge et d'élution.

Cette dernière contrainte conduit, de façon classique, à rallonger les étapes de régénération pour conserver des débits et des portes de charges compatibles avec le bon fonctionnement de l'unité PSA. Globalement, par les méthodes classiques de régulation comme celles évoquées dans le préambule, on est amené à augmenter le nombre de cycles par heure (par réduction du temps de phase), et ainsi traiter moins de gaz par phase pour éviter la pollution de la production par les impuretés. Compte tenu en outre que la teneur en hydrogène dans le gaz en 40 est beaucoup plus faible que la teneur nominale en hydrogène du gaz en 28, la production d'hydrogène qu'il est possible d'obtenir avec l'unité PSA 16 sous un cycle 6.2.2. traitant directement le gaz issu de l'unité de lavage aux amines 20 est sensiblement plus faible que la production nominale détaillée plus haut.

L'emploi d'un cycle auxiliaire, nettement différent du cycle nominal, s'avère avantageux pour conserver des performances acceptables en termes de rendement, de pureté et/ou de productivité pour le gaz produit par l'unité PSA. Selon l'invention, un tel cycle est préalablement préprogrammé et mémorisé dans la mémoire 36 pour pouvoir être transmis, via la ligne 38, à l'unité 16 dès que ses conditions de fonctionnement s'écartent de manière importante des conditions nominales, au point que les performances minimales requises ne sont plus atteintes.

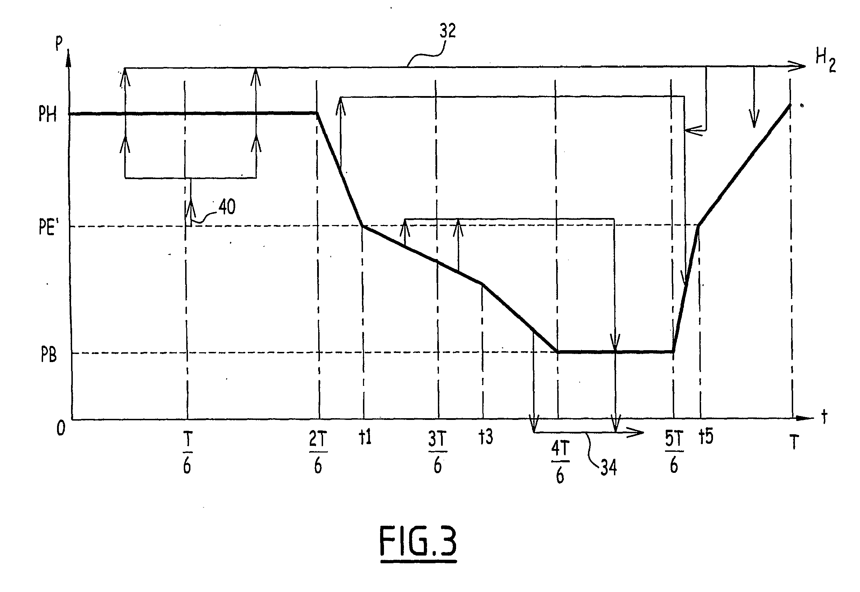

Un exemple d'un tel cycle préprogrammé est représenté sur la figure 3, et correspond à un cycle de type 6.2.1, c'est-à-dire comprenant six adsorbeurs dont deux sont en production, mais présentant un seul équilibrage de pression (à une pression notée PE').

Les conventions de notation et de représentation du cycle de la figure 3 étant identiques à celles du cycle de la figure 2, le cycle 6.2.1 ne sera pas détaillé plus avant.

Le fait de supprimer, par rapport au cycle 6.2.2 de la figure 2, un équilibrage entraîne une diminution du rendement d'extraction en hydrogène mais permet de traiter sensiblement plus de gaz de charge par phase.

La comparaison des schémas des cycles 6.2.2 et 6.2.1 montre par ailleurs que ce dernier cycle permet, à temps de phase inchangé, de disposer de plus de temps pour les étapes de purge et d'élution.

Dans ces conditions, il est possible de produire plus de 70% de la production nominale. Un exemple de bilan matière, avec utilisation de 28 000 $Nm^3/h$ sur les 38 000 disponibles en 40, est le suivant :

|  |  | Gaz en 40 | Gaz produit en 32 | Gaz résiduaire en 34 |
|---|---|---|---|---|
| Composition en % volumique, à sec | $H_2$ | 73,35 | 100 | 38,76 |
|  | $N_2$ | 0,74 | 0 | 1,70 |
|  | CO | 19,31 | 0 | 44,37 |
|  | $CO_2$ | 0,01 | 0 | 0,02 |
|  | $CH_4$ | 6,59 | 0 | 15,14 |
| Débit ($Nm^3/h$) |  | 28 000 | 15 814 | 12 186 |
| Pression (bar abs) |  | 23,8 | 20,6 | 1,35 |
| Température (°C) |  | 35 | 35 | 35 |

En variante non représentée, compte tenu de l'allongement des étapes de purge et d'élution consécutives au changement de cycle, il est possible de réduire le temps de phase tout en gardant une durée suffisante pour ces étapes. Cet aménagement permet de réaliser plus de cycles par heure et donc de produire plus d'hydrogène, au détriment d'environ 1% de rendement.

A l'inverse, il peut être demandé en marche auxiliaire de produire une quantité donnée d'hydrogène sensiblement inférieure à la valeur nominale mais en utilisant le minimum de gaz de charge. Dans ce cas, un cycle 6.1.3 avec un seul adsorbeur en phase de production et trois équilibrages est une solution avantageuse.

De manière plus générale, le procédé selon l'invention consiste à passer du cycle nominal à X. Y. Z à un cycle auxiliaire X'. Y'. Z' avec au moins l'un des nombres X', Y' et Z' différent des nombres respectifs X, Y et Z.

Par comparaison aux marches réduites et aux marches exceptionnelles où il est courant de faire fonctionner l'unité PSA suivant un cycle proche de son cycle nominal au moyen de régulations évoquées dans le préambule, le procédé selon l'invention se fonde sur l'idée que, lorsque les changements de charge sont fréquents ou de durée suffisamment longue, il est souhaitable de prendre en compte les différentes conditions de marche en préprogrammant à l'avance et en mémorisant les cycles correspondants qu'il est prévisible d'utiliser.

Avec une unité PSA comportant de tels cycles préprogrammés, par exemple prévus dès l'installation de cette unité, l'unité PSA est en mesure de fonctionner pour des conditions de fonctionnement diverses, moyennant des aménagements de tuyauteries et de vannes permettant de dériver tout ou partie de lignes amont à l'unité PSA considérée. La mémoire 36 comporte avantageusement des instructions de commande permettant de passer d'un cycle à l'autre, en faisant suivre à l'unité PSA 16 des étapes intermédiaires de transition.

D'autres cas de figure, modifiant de manière importante les conditions de fonctionnement de l'unité PSA, sont envisageables. Par exemple, lors de la maintenance de tout ou partie d'unités amont à l'unité PSA, le gaz de charge est fourni par une source secondaire de débit inférieur au débit nominal.

De même, le procédé selon l'invention est particulièrement intéressant lors de besoins périodiques d'une surcapacité de production puisqu'une diminution du nombre d'équilibrages, si nécessaire conjointement à une réduction du temps de phase, permet d'augmenter la production pour un l'accroissement du débit de charge, par exemple avec une source supplémentaire de gaz de charge.

On notera que cette notion de réduction d'équilibrage n'est pas limitée au cas des équilibrages complets en pression, comme ceux des cycles 6.2.2 et 6.2.1 détaillés sur les figures 2 et 3. En effet, il est possible d'arrêter un équilibrage de pression avant que l'égalité des pressions entre les adsorbeurs reliés l'un à l'autre soit effectivement réalisée ; on parle alors d'équilibrage partiel, et non plus de nombre d'équilibrages mais de fraction d'équilibrage. Par exemple; si en cas d'équilibrage complet la pression haute PH du cycle passe successivement à la pression intermédiaire PE1 dans le cas d'un premier équilibrage complet, puis à la pression PE2 dans le cas d'un deuxième équilibrage complet, et si la pression du second équilibrage est arrêtée à une valeur PE2' supérieure à la valeur PE2, la fraction d'équilibrage réalisée est égale à $1 + \dfrac{PE1 - PE2'}{PE1 - PE2}$, par exemple égale à 1,5 équilibrage. En d'autres termes, les nombres Z et Z' ne sont pas nécessairement des nombres entiers.

Un autre exemple d'application du procédé selon l'invention concerne l'épuration de gaz de raffinerie. Au sein d'une raffinerie, il existe plusieurs sources d'hydrogène (réacteur catalytique, réseau d'hydrogène impur, réseau fioul, etc) qui peuvent faire l'objet d'une épuration par PSA hydrogène. Ces flux gazeux sont généralement composés d'hydrogène, de sulfures d'hydrogène, d'hydrocarbures saturés et insaturés, d'hydrocarbures aromatiques, d'eau, d'azote, etc. Le traitement de ces gaz nécessite l'emploi d'adsorbants spécifiques et permettent une bonne régénération en pression des composés les plus lourds. Une fois cet adsorbant choisi et placé en bas des adsorbeurs, il est possible pour l'unité PSA de traiter à peu près tous les gaz hydrogénés issus d'une raffinerie.

On conçoit qu'il est alors judicieux de remplacer le cycle nominal de l'unité PSA par un cycle auxiliaire préprogrammé, en fonction des conditions de fonctionnement de l'unité. Ainsi, un gaz de charge à haute pression et riche en hydrogène (de teneur en $H_2$ supérieur à 90%) est traité avec un cycle différent de celui utilisé pour un gaz à basse ou moyenne pression et de teneur en hydrogène de l'ordre de 60%.

Plus généralement, plus un gaz est riche en hydrogène, plus le cycle choisi parmi les cycles préprogrammés a une phase de production par adsorption longue par rapport à la phase de régénération, et inversement. Il est ainsi avantageux de préprogrammer toute une gamme de cycles PSA possédant des ratios $\dfrac{\text{durée de la phase d'adsorption}}{\text{durée des étapes de purge et d'élution}}$ compris entre 0,5 et 2.

### Revendications

**1.** Procédé de traitement d'au moins un gaz de charge par adsorption, du type dans lequel on utilise une unité (16) de traitement par adsorption à modulation de pression pour la production d'hydrogène comportant entre 4 et 16 adsorbeurs et dans lequel on fait suivre à ladite unité de traitement (16) un cycle nominal de fonctionnement, déterminé en fonction de conditions nominales de fonctionnement et en vue de garantir des performances minimales de traitement du gaz de charge, **caractérisé en ce que** :

  - on dispose d'au moins un cycle auxiliaire de fonctionnement préprogrammé, différent du cycle nominal,
  - lorsque les conditions de fonctionnement diffèrent des conditions nominales au point que l'unité de traitement (16) n'atteint plus ses performances minimales, on impose à l'unité de traitement (16) de suivre le ou un des cycles auxiliaires,
  - le cycle nominal de fonctionnement est repéré par un triplet X.Y.Z, où X désigne le nombre d'adsorbeurs actifs de l'unité de traitement (16), Y le nombre d'adsorbeurs en adsorption simultanée, et Z le nombre d'équilibrages de pressions sur ledit cycle nominal, et
  - au moins l'un du nombre X' d'adsorbeurs actifs, du nombre Y' d'adsorbeurs en adsorption simultanée, et du nombre Z' d'équilibrages de pressions sur le ou chaque cycle auxiliaire est différent du nombre correspondant du cycle nominal.

**2.** Procédé suivant la revendication 1, **caractérisé en ce que** la composition du gaz de charge est une condition de fonctionnement.

**3.** Procédé suivant l'une des revendications 1 ou 2, **caractérisé en ce que** la pression du gaz de charge ou la pression d'un gaz résiduaire en sortie de l'unité de traitement (16) sont des conditions de fonctionnement.

**4.** Procédé suivant l'une quelconque des revendications précédentes, **caractérisé en ce que** la température du gaz de charge est une condition de fonctionnement.

**5.** Procédé suivant l'une quelconque des revendications précédentes, **caractérisé en ce que** le débit du gaz de charge est une condition de fonctionnement.

**6.** Procédé suivant l'une quelconque des revendications précédentes, **caractérisé en ce qu'**on dispose d'étapes intermédiaires préprogrammées de passage d'un cycle à l'autre parmi les cycles nominal et auxiliaire(s).

7. Procédé suivant l'une quelconque des revendications précédentes, **caractérisé en ce qu'**au moins l'un des équilibrages de pressions est un équilibrage partiel, de sorte que l'un au moins des nombres Z et Z' n'est pas un nombre entier.

8. Procédé suivant l'une quelconque des revendications précédentes, **caractérisé en ce que** le cycle nominal et le ou chaque cycle auxiliaire comportent au moins une étape d'adsorption à une haute pression (PH) du cycle, une étape de purge consistant en une dépressurisation à contre-courant jusqu'à la basse pression (PB) du cycle, une étape d'élution à ladite basse pression, et une étape de repressurisation jusqu'à ladite haute pression, le ratio

$$\frac{\text{durée de la phase d'adsorption}}{\text{durée des étapes de purge et d'élution}}$$ étant compris sensiblement entre 0,5 et 2 pour chacun des cycles.

9. Installation de production combinée d'hydrogène et de monoxyde de carbone comportant :

   - au moins un réacteur de production d'un gaz de synthèse,
   - au moins une unité de décarbonatation du gaz de synthèse,
   - au moins une unité d'épuration du gaz décarbonaté,
   - au moins une unité cryogénique de production de monoxyde de carbone, reliée à une sortie de l'unité d'épuration, et
   - au moins une unité de traitement par adsorption à modulation de pression comportant 6 adsorbeurs, reliée à une autre sortie de l'unité d'épuration

   **caractérisée en ce que** ladite unité de traitement par adsorption à modulation de pression comprend au moins une unité de commande des vannes assurant le suivi des cycles de fonctionnement pourvue d'une mémoire possédant les paramètres du cycle nominal ainsi que d'au moins un cycle auxiliaire de fonctionnement préprogrammé, différent du cycle nominal, et reliée à l'unité de traitement via une ligne de transmission de données de sorte à être apte à la mise en oeuvre du procédé tel que défini à l'une des revendications 1 à 8.

10. Installation selon la revendication 9 **caractérisée en ce qu'**elle comporte une ligne (12) de traitement du gaz naturel, en aval de laquelle sont raccordées à la fois une unité cryogénique (14) de production de monoxyde de carbone (CO) et une unité (16) de production d'hydrogène ($H_2$).
La ligne de traitement (12) comporte, d'amont en aval :

   - un réacteur (18) de production d'un gaz de synthèse, dans lequel le gaz naturel est désulfuré, des hydrocarbures lourds sont décomposés en méthane et en dioxyde de carbone, et le méthane est converti en gaz de synthèse riche en hydrogène et contenant du monoxyde de carbone et du dioxyde de carbone ;
   - une unité (20) de décarbonatation par lavage aux amines, dont un flux résiduaire riche en dioxyde de carbone est recomprimé en (21) et recyclé en amont du réacteur (18); et
   - une unité (22) d'épuration permettant d'arrêter la quasi-totalité de l'eau et d'abaisser fortement la teneur en dioxyde de carbone.

   Une première sortie (24) de l'unité d'épuration (22) est raccordée à l'unité cryogénique (14) qui comporte une ligne (26) de retour à la ligne d'épuration pourvue d'un réchauffeur (27). Une deuxième sortie 28 de l'unité d'épuration (22) est raccordée à l'unité (16) de façon à fournir le gaz de charge pour cette unité (16).
   L'unité d'épuration (22) comporte deux bouteilles d'adsorbants (22A, 22B) mises en ligne de façon alternée pour assurer l'épuration par adsorption modulée en température du mélange gazeux qui sort de l'unité de lavage aux amines (20), l'adsorption de l'eau et du dioxyde de carbone s'effectuant à froid et la désorption de ces composants à chaud.
   L'unité (16) comporte quant à elle six adsorbeurs (R1 à R6), comportant chacun un matériau adsorbant adapté pour fixer par adsorption des impuretés, telles que les hydrocarbures et l'eau contenus dans le gaz de charge de la ligne (28).

**Patentansprüche**

1. Verfahren zur Behandlung von mindestens einem Einsatzgas durch Adsorption, des Typs, bei dem eine Einheit (16) zur Behandlung durch Adsorption mit Druckmodulation zur Herstellung von Wasserstoff mit zwischen 4 und 16 Adsorbern verwendet wird, und wobei an die Einheit zur Behandlung (16) ein nominaler Betriebszyklus angeschlossen wird, der je nach den nominalen Betriebsbedingungen und angesichts der Sicherstellung der minimalen Behandlungsleistungen des Einsatzgases bestimmt wird, **dadurch gekennzeichnet, dass**

- mindestens ein vorprogrammierter Hilfs-Betriebszyklus zur Verfügung steht, der verschieden vom nominalen Zyklus ist,
- wenn sich die Betriebsbedingungen von den nominalen Bedingungen so weit unterscheiden, dass die Einheit zur Behandlung (16) ihre minimalen Leistungen nicht mehr erreicht, die Einheit zur Behandlung (16) veranlasst wird, dem oder den Hilfszyklus/Hilfszyklen zu folgen,
- der nominale Betriebszyklus durch ein Triplett X.Y.Z gekennzeichnet wird, wobei X die Anzahl von aktiven Adsorbern der Einheit zur Behandlung (16) bezeichnet, Y die Anzahl von Adsorbern mit gleichzeitiger Adsorption und Z die Anzahl von Druckausgleichen auf dem nominalen Zyklus bezeichnet, und
- mindestens eine der Anzahl X' von aktiven Adsorbern, der Anzahl Y' von Adsorbern mit gleichzeitiger Adsorption und der Anzahl Z' der Druckausgleiche auf dem oder jedem Hilfszyklus verschieden von der entsprechenden Anzahl des nominalen Zyklus ist.

2. Verfahren nach Anspruch 1, **dadurch gekennzeichnet, dass** die Zusammensetzung des Einsatzgases eine Betriebsbedingung ist.

3. Verfahren nach einem der Ansprüche 1 oder 2, **dadurch gekennzeichnet, dass** der Druck des Einsatzgases oder der Druck eines Rückstandsgases am Ausgang der Einheit zur Behandlung (16) Betriebsbedingungen sind.

4. Verfahren nach einem der vorhergehenden Ansprüche, **dadurch gekennzeichnet, dass** die Temperatur des Einsatzgases eine Betriebsbedingung ist.

5. Verfahren nach einem der vorhergehenden Ansprüche, **dadurch gekennzeichnet, dass** der Durchsatz des Einsatzgases eine Betriebsbedingung ist.

6. Verfahren nach einem der vorhergehenden Ansprüche, **dadurch gekennzeichnet, dass** vorprogrammierte Zwischenschritte des Übergangs von einem Zyklus zum anderen unter dem nominalen und dem Hilfszyklus/den Hilfszyklen zur Verfügung stehen.

7. Verfahren nach einem der vorhergehenden Ansprüche, **dadurch gekennzeichnet, dass** mindestens einer der Druckausgleiche ein teilweiser Ausgleich ist, so dass mindestens eine der Anzahlen Z und Z' nicht eine ganze Zahl ist.

8. Verfahren nach einem der vorhergehenden Ansprüche, **dadurch gekennzeichnet, dass** der nominale Zyklus und der oder jeder Hilfszyklus mindestens einen Schritt des Adsorbierens bei einer hohen Temperatur (PH) des Zyklus, einen Schritt des Entlüftens, der aus einer Gegenstrom-Druckentlastung bis zum Niederdruck (PB) des Zyklus besteht, einen Schritt des Eluierens bei dem Niederdruck und einen Schritt des erneuten Unterdrucksetzens bis zu dem hohen Druck umfasst, wobei die Dauer der Phase der Adsorption/Dauer der Schritte des Entlüftens und des Eluierens im Wesentlichen zwischen 0,5 und 2 bei jedem der Zyklen liegt.

9. Anlage zur kombinierten Produktion von Wasserstoff und Kohlenmonoxid, umfassend:

- mindestens einen Reaktor zur Produktion eines Synthesegases,
- mindestens eine Einheit zur Entkarbonisierung des Synthesegases,
- mindestens eine Einheit zum Reinigen des entkarbonisierten Gases,
- mindestens eine kryogene Einheit zur Herstellung von Kohlenmonoxid, die mit einem Ausgang der Reinigungseinheit verbunden ist, und
- mindestens eine Einheit zur Behandlung durch Adsorption mit Druckmodulation mit 6 Adsorbern, die mit einem anderen Ausgang der Reinigungseinheit verbunden ist

**dadurch gekennzeichnet**, das die Einheit zur Behandlung durch Adsorption mit Druckmodulation mindestens eine Einheit zur Steuerung der Ventile umfasst, die den Fortgang der Betriebszyklen sicherstellt, ausgestattet mit einem Speicher, der die Parameter des nominalen Zyklus aufweist, ebenso wie mindestens einen Hilfszyklus mit vorprogrammiertem Betrieb, der verschieden vom nominalen Zyklus ist, und verbunden mit der Einheit zur Behandlung über eine Leitung zur Übertragung von Daten, um für die Durchführung des Verfahrens, wie in einem der Ansprüche 1 bis 8 definiert, geeignet zu sein.

10. Anlage nach Anspruch 9, **dadurch gekennzeichnet, dass** sie eine Leitung (12) zur Behandlung von Erdgas umfasst, nachgelagert von der gleichzeitig eine kryogene Einheit (14) zur Herstellung von Kohlenmonoxid (CO) und eine Einheit (16) zur Herstellung von Wasserstoff ($H_2$) verbunden sind.
Die Leitung zur Behandlung (12) umfasst, vorgelagert bis nachgelagert:

- einen Reaktor (18) zur Herstellung eines Synthesegases, in dem das Erdgas entschwefelt wird, schwere Kohlenwasserstoffe in Methan und Kohlendioxid abgebaut werden und das Methan in Synthesegas umgewandelt wird, das reich an Wasserstoff ist und Kohlenmonoxid und Kohlendioxid umfasst;
- eine Einheit (20) zur Entkarbonisierung durch Waschen mit Aminen, wobei ein Rückstandsfluss, der reich an Kohlendioxid ist, bei (21) neu komprimiert und vorgelagert vom Reaktor (18) recycliert wird; und
- eine Einheit (22) zum Reinigen, die ermöglicht, fast die Gesamtheit des Wassers zu stoppen und den Gehalt an Kohlendioxid stark zu senken.

Ein erster Ausgang (24) der Einheit zum Reinigen (22) ist mit der kryogenen Einheit (14) verbunden, die eine Leitung (26) zur Rückkehr zur Reinigungsleitung, versehen mit einem Erhitzer (27), umfasst. Ein zweiter Ausgang (28) der Einheit zum Reinigen (22) ist derart mit der Einheit (16) verbunden, dass er Einsatzgas für diese Einheit (16) liefert.
Die Einheit zum Reinigen (22) umfasst zwei Flaschen mit Adsorptionsmitteln (22A, 22B), die auf alternierende Weise in Reihe geschaltet sind, um die Reinigung durch temperaturmodulierte Adsorption der gasförmigen Mischung sicherzustellen, die aus der Einheit zum Waschen mit Aminen (20) austritt, wobei die Adsorption des Wassers und des Kohlendioxids kalt und die Desorption dieser Komponenten heiß erfolgt.
Die Einheit (16) selbst umfasst sechs Adsorber (R1 bis R6), die jeweils ein adsorbierendes Material umfassen, das ausgelegt ist, um Verunreinigungen durch Adsorption zu fixieren, wie z.B. die Kohlenwasserstoffe und das Wasser, die im Einsatzgas der Leitung (28) enthalten sind.

**Claims**

1. Method for treating at least one feed gas by adsorption, in which a pressure swing adsorption treatment unit (16) is used for producing hydrogen, comprising between 4 and 16 adsorbers and in which said treatment unit (16) follows a nominal operating cycle, determined on the basis of nominal operating conditions and in order to ensure minimal feed gas treatment performances, **characterized in that**

- there is at least one preprogrammed auxiliary operating cycle, different from the nominal cycle,
- when the operating conditions differ from the nominal conditions to the point that the treatment unit (16) no longer achieves its minimal performance, the treatment unit (16) is required to follow the or one of the auxiliary cycles,
- the nominal operating cycle is referenced by a triplet X.Y.Z, in which X designates the number of active adsorbers of the treatment unit (16), Y designates the number of adsorbers in simultaneous adsorption, and Z designates the number of pressure balances on said nominal cycle, and
- at least one of the number X' of active adsorbers, the number Y' of adsorbers in simultaneous adsorption and the number Z' of pressure balances on the or each auxiliary cycle is different from the corresponding number of the nominal cycle.

2. Method according to claim 1, **characterized in that** the composition of the feed gas is an operating condition.

3. Method according to one of claims 1 or 2, **characterized in that** the pressure of the feed gas or the pressure of a residual gas at the outlet of the treatment unit (16) are operating conditions.

4. Method according to any one of the previous claims, **characterized in that** the feed gas temperature is an operating condition.

5. Method according to any one of the previous claims, **characterized in that** the flow rate of the feed gas is an operating condition.

6. Method according to any one of the previous claims, **characterized in that** there are preprogrammed intermediate steps for going from one cycle to another among the nominal and auxiliary cycles.

7.  Method according to any one of the previous claims, **characterized in that** at least one of the pressure balances is a partial balance, so that at least one of the numbers Z and Z' is not an integer.

8.  Method according to any one of the previous claims, **characterized in that** the nominal cycle and the or each auxiliary cycle comprise at least one step of highpressure (HP) adsorption of the cycle, a purge state consisting in counter-current depressurization until a low pressure (LP) of the cycle is reached, a step of elution at said low pressure, and a step of re-pressurization to said high pressure, the ratio of the duration of the adsorption phase to the duration of the purge and elution steps being substantially between 0.5 and 2 for each of the cycles.

9.  Equipment for the combined production of hydrogen and carbon monoxide comprising:

    - at least one synthesis gas production reactor,
    - at least one synthesis gas decarbonation unit,
    - at least one decarbonated gas purification unit,
    - at least one cryogenic carbon monoxide production unit, connected to an outlet of the purification unit, and
    - at least one pressure swing adsorption treatment unit comprising 6 adsorbers, connected to another outlet of the purification unit,

    **characterized in that** said pressure swing modulation adsorption treatment unit includes at least one unit for controlling the valves ensuring that the operating cycles are followed, provided with a memory having the nominal cycle parameters as well as at least one preprogrammed auxiliary operating cycle, different from the nominal cycle, and connected to the treatment unit via a data transmission line so as to be capable of implementing the method as defined in one of claims 1 to 8.

10. Equipment according to claim 9, **characterized in that** it has a natural gas treatment line (12), downstream of which both a cryogenic carbon monoxide (CO) production unit (14) and a hydrogen ($H_2$) production unit (16) are connected. The treatment line (12) comprises, from upstream to downstream:

    - a synthesis gas production reactor (18), in which the natural gas is desulfurized, heavy hydrocarbons are decomposed into methane and carbon dioxide, and the methane is converted into a hydrogen-rich synthesis gas containing carbon monoxide and carbon dioxide;
    - a unit (20) for decarbonation by amine scrubbing, in which a residual carbon dioxide-rich flow is recompressed in (21) and recycled upstream of the reactor (18); and
    - a purification unit (22) making it possible to stop almost all of the water and significantly reduce the carbon dioxide content.

    A first outlet (24) of the purification unit (22) is connected to the cryogenic unit (14), which has a line (26) back to the purification line provided with a heater (27). A second outlet (28) of the purification unit (22) is connected to the unit (16) so as to supply the feed gas for said unit (16).

    The purification unit (22) has two adsorbent bottles (22A, 22B) alternately placed on the line so as to ensure the purification by temperature-modulated adsorption of the gaseous mixture leaving the amine scrubbing unit (20), the adsorption of the water and the carbon dioxide being performed under cold conditions and the desorption of said components being performed under hot conditions.

    The unit (16) comprises six adsorbers (R1 to R6), each comprising an adsorbent material suitable for fixing by adsorption of impurities, such as hydrocarbons and water contained in the feed gas of the line (28).

FIG.1

EP 1 517 738 B1

FIG.2

FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0375220 A1